**Europäisches Patentamt**

**European Patent Office**

**Office européen des brevets**

(19)

(11) Numéro de publication : **0 575 208 A1**

# (12) DEMANDE DE BREVET EUROPEEN

(21) Numéro de dépôt : **93401318.6**

(22) Date de dépôt : **21.05.93**

(51) Int. Cl.$^5$ : **G06F 15/68**, G06F 15/70

(30) Priorité : **16.06.92 FR 9207275**

(43) Date de publication de la demande :
**22.12.93 Bulletin 93/51**

(84) Etats contractants désignés :
**DE ES GB IT NL**

(71) Demandeur : **SAT (Société Anonyme de Télécommunications)**
**6, avenue d'Iéna**
**F-75116 Paris (FR)**

(72) Inventeur : **Samy, Roger**
**22, allée Pierre Rive**
**F-77150 Lesigny (FR)**

(74) Mandataire : **Martinet & Lapoux**
**BP 405**
**F-78055 St. Quentin en Yvelines Cédex (FR)**

(54) **Procédé de détection d'apparition d'objets ponctuels sur fond texturé.**

(57)   Le procédé selon l'invention vise à détecter des apparitions d'objets ponctuels dans une image à fond texturé. Une détection de ces objets est d'abord réalisée en comparant, pour chaque bloc de pixels, le niveau de luminosité du pixel central du bloc avec deux seuils définis à partir de la moyenne des niveaux de luminosité ($M1_{i,j}$) du bloc et de la moyenne des valeurs absolues des écarts de niveaux de luminosité ($M2_{i,j}$) de part et d'autre de ladite moyenne ($M1_{i,j}$). Si le niveau de luminosité du pixel central est situé à l'extérieur de ces deux seuils, une alarme est produite ($S_A$). Il est proposé de calculer, en réponse à cette détection, des moments d'ordre 3 et 4 ($M3_{i,j}$, $M4_{i,j}$) représentatifs de la répartition des niveaux de luminosité des pixels du bloc de part et d'autre de ladite moyenne et de sélectionner uniquement certaines de ces alarmes comme véritables alarmes, à partir notamment des moments d'ordre 3 et 4 ($M3_{i,j}$, $M4_{i,j}$). Une classification linéaire ou un réseau de neurones sont utilisés pour cette sélection.

FIG.4A

La présente invention concerne un procédé de détection d'apparition d'objets ponctuels dans une image numérisée sous la forme d'une pluralité de pixels.

L'image est par exemple obtenue par balayage de l'espace environnant au moyen d'un dispositif infrarouge embarqué dans un véhicule terrestre ou un aéronef afin de surveiller leur environnement et détecter rapidement toute intrusion de menaces dans l'image afin de réagir rapidement.

Un tel procédé peut par exemple être exploité en télédétection pour fournir des éléments de renseignement lors de missions stratégiques militaires ou de surveillance par satellite, pour des applications à des traitements d'images obtenues par radar ou sonar.

Plus précisément, l'invention concerne la détection d'apparition d'objets ponctuels sur fond texturé. Ainsi les objets à détecter ont sensiblement la taille d'un pixel et apparaissent sur des fonds non uniformes, tels que ciel nuageux et lisière de forêt, pour lesquels la détection est beaucoup plus difficile à effectuer que sur des fonds uniformes, tels que ciel bleu ou mer.

Le dispositif infrarouge pour balayer l'espace environnant est connu selon la technique antérieure et comprend une barrette verticale de détecteurs infrarouges associée à un dispositif de focalisation, l'ensemble étant entraîné à une vitesse angulaire constante autour d'un axe de rotation vertical. L'espace environnant est ainsi cycliquement analysé sur un angle de 360 degrés dans une bande s'étendant sur une hauteur suffisante afin qu'une large plage de l'espace environnant puisse être analysée.

Dans la technique antérieure sont distingués quatre procédés principaux pour la détection d'objets ponctuels dans une image, qui consistent respectivement en :

a) l'analyse des textures;

b) le filtrage spatio-temporel, ou temporel;

c) l'utilisation des champs de Gibbs; et

b) la normalisation statistique.

L'analyse des textures est effectuée selon des algorithmes connus de traitement d'images qui sont relativement complexes pour une mise en oeuvre dans un contexte de détection d'objets ponctuels. En outre, de tels algorithmes se revèlent inefficaces dès lors que la texture de l'image à traiter ne se rapproche pas d'un modèle de processus stationnaire dans l'espace et dans le temps.

Les systèmes de détection fonctionnent suivant des algorithmes de filtrage spatio-temporel, ou temporel, imposent un recalage systématique des images avec la précision du pixel pour détecter des objets ponctuels puisque de tels algorithmes sont basés sur l'évolution temporelle des niveaux de luminosité des pixels. De tels algorithmes sont donc non opérationnels dans des systèmes de surveillance embarqués ou de télédétection.

La mise en oeuvre des champs de Gibbs est réalisée au moyen d'algorithmes de relaxation stochastique ou déterministe pour segmenter l'image texturée. Pour des raisons de coût notamment (utilisation de processeurs massivement parallèles ou "transputers"), leurs implantations semblent peu réalistes dans le cadre d'une utilisation généralisée. De plus, l'utilisation de tels algorithmes ne se révèle véritablement efficace que lors de la phase de prise de décision d'une détection d'un objet ponctuel, c'est-à-dire après l'acquisition et le traitement de l'image. En effet, compte-tenu des temps de calcul nécessaires, ces algorithmes ne peuvent être véritablement opérationnels, sans nécessiter des temps de réaction relativement longs, que s'ils sont utilisés ponctuellement dans la détection.

Enfin, et pour terminer cette énumération des procédés de détection d'objets ponctuels selon la technique antérieure, les techniques de normalisation statistique, les plus proches de l'invention, mettent en oeuvre un algorithme d'apodisation. Cet algorithme est basé sur des calculs de moyenne et variance locales permettant de déduire le contraste entre chaque point de l'image traitée et un seuil fourni, d'une part, par la variance donnant une estimation de l'agitation locale du fond et, d'autre part, un coefficient fixant un taux de fausses alarmes toléré. La modélisation sous-jacente à cet algorithme de détection consiste en une distribution suivant une loi normale (de type gaussienne) qui est parfaitement acceptable pour modéliser des fonds quasi-uniformes mais non valable pour des fonds texturés.

La présente invention vise à remédier aux inconvénients précités selon la technique antérieure en fournissant un procédé de détection d'objets ponctuels sur fond texture utilisant le modèle statistique dernièrement précité et palliant aux ambiguités de détection entre alarmes réelles et fausses alarmes.

A cette fin, selon l'invention, un procédé de détection d'apparition d'objets ponctuels sur fond texturé dans une image numérisée sous la forme d'une pluralité de pixels comprenant, pour chacun de blocs de pixels ayant une dimension donnée et centré sur l'un respectif desdits pixels de l'image, les étapes suivantes :

un calcul de moyenne de niveaux de luminosité des pixels du bloc,

un calcul de variance des niveaux de luminosité des pixels du bloc, ladite variance étant représentative de la moyenne des valeurs absolues des écarts des niveaux de luminosité des pixels du bloc de part et d'autre de ladite moyenne de niveaux, et

une détection d'apparition d'objet ponctuel, en tant que pixel central, dans le bloc lorsque le niveau de luminosité dudit pixel central du bloc est supérieur ou inférieur à deux seuils respectivement égaux à la somme de ladite moyenne de niveaux et de ladite moyenne des valeurs absolues des écarts et à la différence entre ladite moyenne de niveaux et ladite moyenne des valeurs absolues des écarts,

est caractérisé en ce qu'il comprend en outre

en réponse à ladite détection d'apparition, un calcul de moments d'ordre trois et quatre des niveaux de luminosité dudit bloc représentatifs tous deux de la répartition des niveaux de luminosité des pixels du bloc de part et d'autre de ladite moyenne de niveaux,

et pour l'intégralité de ladite image, une sélection d'objets ponctuels parmi les objets ponctuels dont les apparitions sont détectées selon l'étape de détection, en fonction au moins des moments d'ordre trois et quatre calculés pour les blocs correspondant aux apparitions d'objet ponctuel détectées.

Selon une première variante de l'invention, la sélection est effectuée par une classification linéaire opérée sur les moments d'ordre trois et quatre dudit bloc.

De préférence, la classification linéaire est précédée par une augmentation du nombre des détections d'apparition par réglage des deux seuils, et comprend

- la détermination d'un barycentre, en terme de moments d'ordre trois et quatre, pour l'ensemble des moments d'ordre trois et quatre calculés en réponse à des détections d'apparition d'objet ponctuel dans l'image, et
- la sélection des pixels centraux de blocs associés auxdits moments d'ordre trois et quatre définis dans une fenêtre prédéterminée autour dudit barycentre.

Selon une seconde variante de l'invention, la sélection comprend, suite à une détection d'apparition d'un objet ponctuel,

- la multiplication matricielle des moyenne, variance, moments d'ordre trois et quatre du bloc correspondant par une matrice de coefficients synaptiques pour établir une valeur à laquelle est appliquée une fonction non linéaire afin de produire un signal binaire dont les états indiquent la sélection et le défaut de sélection dudit objet ponctuel.

D'autres caractéristiques et avantages de la présente invention apparaîtront plus clairement à la lecture de la description suivante de plusieurs réalisations préférées de l'invention, en référence aux dessins annexés correspondants dans lesquels :

- la figure 1 montre un bloc-diagramme schématique d'un système de détection d'objets ponctuels selon la technique antérieure;
- la figure 2 est un bloc-diagramme détaillé d'un dispositif de détection selon la technique antérieure, inclus dans le système de la figure 1;
- la figure 3 est un histogramme des valeurs de moments d'ordre 3 et 4 relevées pour des objets ponctuels détectés par le dispositif de la figure 2;
- la figure 4A est un bloc-diagramme d'un dispositif de détection selon une première réalisation de l'invention à inclure dans le système de la figure 1 en remplacement de celui montré à la figure 2 ;
- la figure 4B est un bloc-diagramme d'un dispositif de détection selon une seconde réalisation de l'invention à inclure dans le système de la figure 1 en remplacement de celui montré à la figure 2 ;
- la figure 5 est un diagramme de connexions associées à des coefficients synaptiques d'un réseau de neurones formels inclus dans le dispositif de détection de la figure 4B;
- la figure 6 est une représentation tridimensionnelle de niveaux de luminosité d'un bloc de pixels; et
- la figure 7 montre un bloc de pixels de dimension (7 x 7).

Bien que l'invention soit décrite ci-après dans le cadre de la détection d'objets ponctuels sur fond texturé, celle-ci est, à fortiori, applicable à une telle détection sur des fonds uniformes en étant d'autant plus efficace.

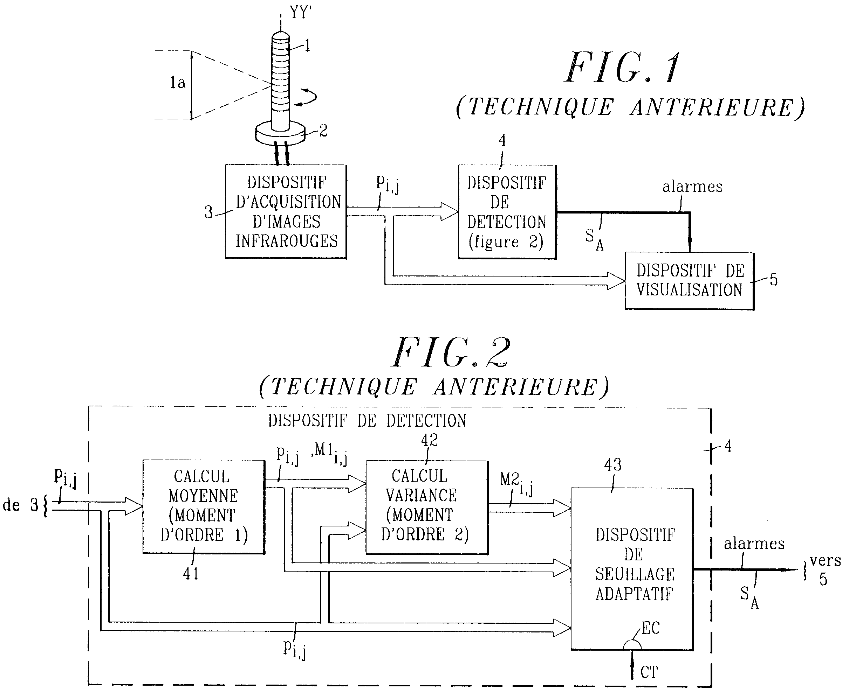

En référence à la figure 1, un système de détection d'objets ponctuels selon la technique antérieure comprend typiquement une barrette de détecteurs infrarouges 1 disposée verticalement et associée à un dispositif de focalisation 1a, un dispositif d'acquisition d'images infrarouges 3, un dispositif de détection 4 et un dispositif de visualisation 5.

La barrette de détecteurs 1 et le dispositif de focalisation 1a sont montés sur un support tournant 2 pour être entraînés en rotation à une vitesse angulaire constante autour d'un axe vertical YY'. Des sorties de la barrette de détecteurs 1 sont appliquées à une entrée du dispositif d'acquisition d'images infrarouges de l'espace environnant 3 pour en fournir cycliquement une image de pixels à un rythme suffisamment rapide.

L'espace environnant est ainsi analysé périodiquement pour un angle de gisement de 360 degrés. Le dispositif d'acquisition 3 inclut, en outre, des moyens de balayage pour sélectionner tour à tour chacune desdites sorties des détecteurs respectifs constituant la barette 1. Ces moyens de balayage sont synchronisés avec la commande de rotation de la barette 1 incluse dans le support 2. En sortie le dispositif d'acquisition 3 fournit un signal vidéo, ici numérique, représentant une image infrarouge glissante de l'espace environnant, par rafraîchissement cyclique.

Cette image glissante consiste en une pluralité de pixels, chaque pixel étant associé à une intensité de rayonnement infrarouge détectée à un instant donné par un détecteur de la barette 1.

Pour chaque tour complet de l'ensemble 1 - 1a, le signal vidéo numérisé sortant du dispositif d'acquisition 3 supporte un certain nombre de niveaux de luminosité $p_{i,j}$ de pixels, par exemple codés en mots à 8 bits, chacun de ces niveaux de luminosité $p_{i,j}$ étant représentatif respectivement d'un niveau de luminosité d'une portion élémentaire (pixel) de l'image de l'espace environnant.

Ces niveaux de luminosité $p_{i,j}$ sont appliqués à une entrée du dispositif de détection 4 qui détecte des objets ponctuels constituant des menaces, apparaissant dans l'image numérisée. Ces menaces sont alors visualisées sur un écran du dispositif de visualisation 5 par des repères particuliers inscrits sur l'écran de visualisation de l'image de l'espace environnant. Plus précisément, le dispositif de visualisation 5 reçoit, d'une part, les niveaux de luminosité $p_{i,j}$ des différents pixels relatifs à l'espace environnant et, d'autre part, des signaux d'alarme $S_A$ associés respectivement à certains des pixels identifiés comme des menaces dans le dispositif 4. Ces pixels sont alors visualisés sur un écran de visualisation du dispositif 5 et repérés par une marque distinctive.

En référence à la figure 2, un dispositif de détection d'apparition d'objets ponctuels connu selon la technique antérieure, et utilisant l'approche de normalisation statistique, comprend typiquement un moyen de calcul de moyenne 41, un moyen de calcul de variance 42 et un dispositif de seuillage adaptatif 43.

L'image numérisée de l'espace environnant constituée des niveaux de luminosité de chaque pixel est appliquée au fur et à mesure de son acquisition et de son rafraîchissement au moyen de calcul de moyenne 41. Comme schématisé sur la figure 6, le moyen de calcul de moyenne 41 opère sur des blocs élémentaires de pixels de dimension (K x K) de l'image, où K est un nombre entier impair qui est égal à trois selon l'exemple décrit en référence à la figure 6, mais qui est compris, en pratique, entre 5 et 9. Dans la représentation tridimensionnelle de la figure 6, l'axe vertical correspond a l'intensité de niveau de luminosité $p_{i,j}$ des pixels. Chaque bloc élémentaire $BE_{i,j}$ est centré sur un pixel donné $p_{i,j}$, avec $0 < i \leq I$ et $O < j \leq J$, I x J définissant la dimension de l'image et chaque pixel de l'image est le centre d'un bloc élémentaire. Chaque pixel appartient donc à 9 blocs élémentaires dans cette représentation où un bloc élémentaire a une dimension (K x K) = (3 x 3). Périodiquement et au rythme du rafraîchissement de l'image, le moyen 41 calcule la moyenne spatiale des niveaux de luminosité des pixels de chaque bloc ainsi défini. En terme statistique, pour lequel chaque bloc élémentaire de pixels est associé à une série statistique discrète de niveaux de luminosité, cette moyenne spatiale, appelée "moment d'ordre 1", est définie, pour des blocs de dimension (3 x 3), par :

$$M1_{i,j} = (1 / K^2) . \sum_{m=-1}^{+1} \sum_{n=-1}^{+1} p_{i+m,j+n} ,$$

avec K = 3,
pour le bloc élémentaire $BE_{i,j}$ centré sur le pixel d'adresse (i,j). Ainsi, en revenant à la figure 2, le moyen 41 calcule cycliquement, pour chaque bloc élémentaire, la moyenne spatiale qui lui est associée. Les niveaux de luminosité $p_{i,j}$ et les moments d'ordre 1 $M1_{i,j}$ ainsi calculés sont appliqués successivement pour chaque pixel de l'image à une entrée du moyen de calcul de variance 42. Celui-ci calcule la variance appelée "moment d'ordre 2" $M2_{i,j}$ , associée à chaque bloc de pixels de dimension (K x K) centre sur un pixel d'adresse (i,j). Ce moment d'ordre 2 est défini par :

$$M2_{i,j} = (1 / K^2) \sum_{m=-1}^{+1} \sum_{n=-1}^{+1} \left( P_{i+n,j+n} - M1_{i,j} \right)^2 ,$$

avec K = 3.

Le moment d'ordre 1, dit moyenne $M1_{i,j}$ , calculé pour chaque bloc élémentaire de pixels est égal à la moyenne des niveaux de luminosité $p_{i,j}$ des pixels dudit bloc. Le moment d'ordre 2, dit variance $M2_{i,j}$ , est représentatif de la moyenne des valeurs absolues des écarts des niveaux de luminosité $p_{i,j}$ de part et d'autre de la moyenne des niveaux de luminosité donnée par le moment d'ordre 1 $M1_{i,j}$.

Les moments d'ordre 1 et 2 produits pour chaque bloc élémentaire de l'image respectivement par les moyens 41 et 42 sont appliques à des première et seconde entrées du dispositif de seuillage adaptatif 43. Ce dernier reçoit également, à une troisième entrée, les niveaux de luminosité $p_{i,j}$ des pixels acquis par le dispositif 3. Enfin, une entrée de commande EC du dispositif de seuillage 43 reçoit un coefficient de tolérance CT. En se référant de nouveau à la figure 6 est décrit ci-après le traitement effectué par le dispositif de seuillage adaptatif 43. Le niveau de luminosité $p_{i,j}$ du pixel central de chaque bloc élémentaire $BE_{i,j}$ reçu via la troisième entrée est comparé d'une part, à la somme de la moyenne $M1_{i,j}$ des niveaux de luminosité dudit bloc $BE_{i,j}$ (moment d'ordre 1) et d'une valeur représentative de la moyenne des valeurs absolues des écarts de niveau de luminosité $p_{i,j}$ des pixels du bloc par rapport à ladite moyenne des niveaux de luminosité, d'autre part à la différence entre la moyenne $M1_{i,j}$ et ladite valeur représentative de la moyenne des valeurs absolues d'écarts. Cette valeur représentative est directement déduite du moment d'ordre 2, dit variance $M2_{i,j}$. En d'autres termes, le niveau de luminosité du pixel central est comparé avec deux seuils de déclenchement représentatifs respectivement de la dispersion moyenne des niveaux de luminosité $p_{i,j}$ des pixels de part et d'autre (inférieurs ou supérieurs) de la moyenne des niveaux de luminosité (moment d'ordre 1). La valeur représentative peut être modifiée par ajustement du coefficient de tolérance CT.

Une moyenne des valeurs absolues des écarts de niveaux de luminosité (représentée par le moment d'ordre 2) par rapport à la moyenne des niveaux de luminosité des pixels du bloc $BE_{i,j}$ prenant une valeur faible signifie, ou bien que les niveaux de luminosité des pixels du bloc sont peu dispersés autour de la moyenne, ou bien que les niveaux de luminosité très éloignés de cette moyenne sont peu nombreux. C'est cette dernière considération qui est prise en compte pour la détection d'objets ponctuels sur fond uniforme puisque dans ce cas, la moyenne des valeurs absolues des écarts prend une valeur faible et les niveaux de luminosité très éloignés de cette moyenne doivent être analysés comme des menaces, des éléments à détecter.

Dans le cas d'un fond texturé, le problème est tout autre puisque les niveaux de luminosité très éloignés de la moyenne peuvent être perçus comme des menaces ou bien comme des éléments naturels du fond de l'image. En pratique, le coefficient de tolérance CT est utilisé pour modifier les deux seuils de déclenchement de détection de part et d'autre de la moyenne des niveaux de luminosité, seuils de déclenchement fournis initialement par le calcul de la variance $M2_{i,j}$.

Le dispositif de seuillage 43 produit un signal d'alarme $S_A$ dès lors que le niveau de luminosité du pixel central est respectivement supérieur et inférieur aux deux seuils. Ce signal d'alarme est reçu par le dispositif de visualisation qui marque de façon distinctive des pixels centraux de blocs ayant été détectés comme des menaces dans l'image visualisée.

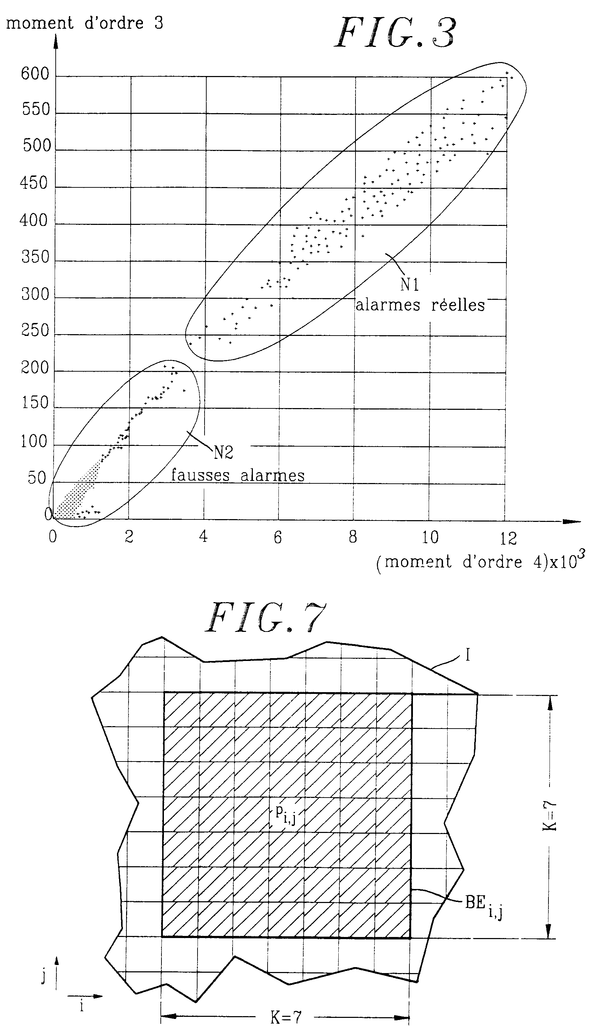

En référence à la figure 3, sont maintenant indiqués des éléments expérimentaux inattendus ayant conduit l'inventeur à affiner la détection d'objets ponctuels selon la technique antérieure en vue de réaliser l'invention.

L'histogramme de la figure 3 a été obtenu de la manière suivante. Pour chacun des différents pixels centraux identifiés comme menaces par le dispositif 4 mettant en oeuvre un traitement d'apodisation, sont calculés des moments d'ordre 3 et 4, indiqués en ordonnée et abcisse de l'histogramme, relatifs au bloc de pixels élémentaires correspondant qui est centré sur ledit pixel central identifié comme menace. L'histogramme a été obtenu pour des blocs élémentaires $BE_{i,j}$ d'image I du type de celui présenté à la figure 7 et ayant une dimension $(K \times K) = (7 \times 7)$, relativement à une séquence temporelle de plusieurs images de dimension $(512 \times 256)$ cycliquement rafraîchies. Les menaces à détecter sont ici des hélicoptères apparaissant sur un fond texturé constitué par un ciel nuageux.

Les définitions des moments d'ordre 3 et 4 sont indiquées ci-après, à titre d'exemple, pour des blocs de dimension $(K \times K) = (3 \times 3)$, tels que celui montré dans la figure 6 par :

$$M3_{i,j} = (1 / K^2) . \sum_{m=-1}^{+1} \sum_{n=-1}^{+1} \left( p_{i+n,j+n} - M1_{i,j} \right)^3 / M2_{i,j}^{3/2} ,$$

et

$$M4_{i,j} = (1 / K^2) . \sum_{m=-1}^{+1} \sum_{n=-1}^{+1} \left( p_{i+m,j+n} - M1_{i,j} \right)^4 / M2_{i,j}^2 .$$

Dans ces formules, les deux moments sont normalisés par division par $M2_{i,j}^{3/2}$ et $M2_{i,j}^2$.

Le moment d'ordre 3 est représentatif de l'asymétrie d'une série statistique, c'est-à-dire de l'asymétrie de la répartition des valeurs prises respectivement de part et d'autre de la valeur moyenne de la série. Le moment d'ordre 4 est quant à lui associé à "l'aplatissement" de la série, c'est-à-dire à l'étalement des valeurs prises par la série autour de la valeur moyenne.

Deux informations particulièrement intéressantes apparaissent à la lecture de l'histogramme de la figure 3. D'une part, les moments d'ordre 3 et 4 sont toujours différents de zéro, ce qui signifie que chaque bloc élémentaire de pixels n'est pas assimilable à une série statistique discrète de type gaussienne. D'autre part, il apparaît que le nuage de points dans l'histogramme peut être séparé en deux "sous-nuages" N1 et N2, ce qui constitue la caractéristique la plus importante. Il a été montré expérimentalement que l'un N1 des sous-nuages correspond à des premières alarmes détectées par le dispositif 4 de la figure 2 qui constituent réellement des menaces, et donc dans le cadre de cette expérimentation, des apparitions ponctuelles (pixel) d'hélicoptère dans l'image. L'autre N2 des sous-nuages est caractérisé par des moments d'ordre 3 et 4 inférieurs à ceux des premières alarmes et correspond à des secondes alarmes qui sont également détectées par le dispositif 4 mais qui ne constituent que des fausses alarmes.

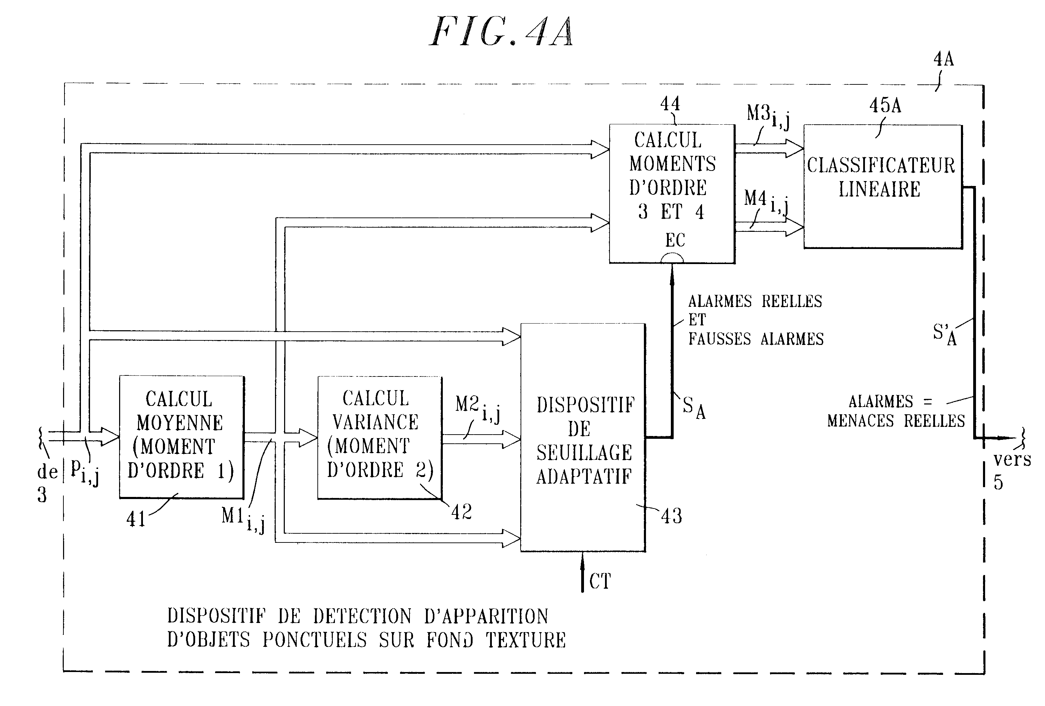

Une première réalisation d'un dispositif 4A pour détecter l'apparition d'objets ponctuels sur fond texture selon l'invention est maintenant présentée en référence à la figure 4A. Le dispositif comprend un moyen de calcul de moyenne 41, un moyen de calcul de variance 42 et un dispositif de seuillage adaptatif 43 analogues à et agencés de la même manière que ceux dans le dispositif 4 selon la technique antérieure, montré a la figure 2.

Le dispositif de détection 4A selon l'invention comprend en outre un moyen 44 pour calculer des moments d'ordre 3 et 4 et un classificateur linéaire 45A. Le moyen de calcul des moments d'ordre 3 et 4 44 reçoit respectivement à trois entrées, les niveaux de luminosité $p_{i,j}$ rafraîchis cycliquement des pixels de l'espace environnant sortant du dispositif d'acquisition d'images 3 (figure 1), les moyennes des niveaux de luminosité $M1_{i,j}$ calculées chacune par le moyen 41 pour le bloc de pixels de dimension (K x K), centre sur le pixel respectif d'adresse (i,j) et les variances $M2_{i,j}$ calculées chacune par le moyen 42 relativement au nombre de période respectif. Une entrée de commande EC du moyen de calcul 44 est reliée à la sortie du dispositif de seuillage adaptatif 43. En réponse à une menace détectée dans l'espace environnant par les moyens connus selon la technique antérieure 41, 42 et 43, un premier signal d'alarme $S_A$ est appliqué à l'entrée de commande EC du moyen de calcul 44 par le dispositif de seuillage adaptatif 43. Ce signal d'alarme $S_A$ active alors le moyen de calcul 44 qui calcule pour le bloc de pixels centré sur le pixel ayant été détecté comme une menace par les moyens conventionnels 41, 42 et 43, d'une part, le moment d'ordre 3 $M3_{i,j}$ et, d'autre part, le moment d'ordre 4 $M4_{i,j}$.

La figure 3 montre clairement que les deux classes représentées par les deux nuages N1 et N2 définissant respectivement les alarmes réelles et les fausses alarmes sont linéairement séparables et peuvent donc être différenciées par détermination d'un hyperplan.

Dans le cadre de la représentation de la figure 3, cette séparation linéaire pourrait simplement consister à effectuer des combinaisons linéaires $CL_{i,j}$ des moments d'ordre 3 et 4 calculés pour des blocs élémentaires de pixels centrés sur des pixels détectés comme menaces par les moyens conventionnels 41, 42 et 43. Ainsi ces combinaisons linéaires s'écriraient :

$$CL_{i,j} = \alpha.M3_{i,j} + \beta.M4_{i,j} ,$$

où $\alpha$ et $\beta$ désignent deux coefficients prédéterminés.

Par comparaison avec un seuil prédéterminé et par un choix approprié des coefficients $\alpha$ et $\beta$, il serait ainsi possible de distinguer les fausses alarmes des alarmes réelles, toutes deux détectées comme alarmes par les moyens conventionnels.

Or l'histogramme de la figure 3 a été obtenu pour une taille donnée de bloc de pixels (K x K) = (7 x 7), pour un fond texturé précis, etc... Il constitue donc un histogramme optimal non aisément reproductible pour différents types de menaces, de fonds,..etc.

Ainsi, en pratique, la séparation linéaire réalisée par le séparateur linéaire 45A est tout autre, bien qu'elle corresponde également à une opération de différenciation linéaire.

Le fonctionnement du dispositif 4A selon l'invention consiste à augmenter exagérément le nombre d'alarmes détectées par le dispositif conventionnel par réglage du coefficient de tolérance CT, appliqué à l'entrée du dispositif de seuillage adaptatif 43, tel qu'expliqué précédemment. En exagérant ainsi le nombre de fausses alarmes détectées comme alarmes par le dispositif conventionnel et compte-tenu de la répartition "aléatoire" des moments d'ordre 3 et 4 de ces alarmes dans un diagramme du type de celui de la figure 3, il apparaît finalement que le barycentre des points associés à toutes les alarmes est sensiblement identique au barycentre des points associés aux fausses alarmes. La classification des alarmes par séparation linéaire dans le classificateur 45A consiste alors à définir le barycentre des points du nuage et une fenêtre circulaire centrée sur ce barycentre et ayant un rayon (K.R), R désignant la variance des distances des points autour du barycentre et K une constante expérimentale prédéterminée de l'ordre de 1. En réponse à chaque point d'un histogramme du type de celui de la figure 3 dont les coordonnées, les moments $M3_{i,j}$ et $M4_{i,j}$, sont obtenues dans les conditions précitées et fournies par deux ports de sortie du moyen 44 et qui appartiennent à une fenêtre prédéterminée autour du barycentre des points du nuage, le classificateur linéaire 45A produit un second signal d'alarme $S'_A$ signalant la présence d'une menace réelle dans l'image de pixels acquise.

En référence à la figure 4B, un dispositif 4B pour détecter l'apparition d'objets ponctuels sur fond texturé selon une seconde réalisation de l'invention comprend le moyen de calcul de moyenne 41, le moyen de calcul de variance 42, le dispositif de seuillage adaptatif 43 et le moyen de calculs des moments d'ordre 3 et 4 44, tous étant analogues à et agencés de la même manière que ceux dans la première réalisation montrée à la figure 4A.

Le dispositif 4B comprend en outre un réseau de neurones formels 45B. Les deux ports de sortie du moyen de calcul 44 fournissant le moment d'ordre 3, $M3_{i,j}$, et le moment d'ordre 4, $M4_{i,j}$ ainsi que les ports de sortie des moyens de calcul de moyenne 41 et de variance 42 sont respectivement appliquées à quatre ports d'entrée du réseau de neurones formels 45B. La sortie du dispositif de seuillage adaptatif 43 est également appliquée à une entrée de commande EC du réseau de neurones 45B. Lorsque le dispositif de seuillage adaptatif 43 produit un premier signal d'alarme $S_A$ de détection d'objet ponctuel dans l'image, celui-ci active à la fois le moyen de calcul 44 et le réseau de neurones formels 45B. Le moyen active 44 calcule les moments d'ordre 3 et 4 sur le bloc de pixels correspondant centre sur ledit pixel détecté comme alarme par les moyens conventionnels 41, 42 et 43. Les moyenne (moment d'ordre 1), variance (moment d'ordre 2), moment d'ordre 3 et moment d'ordre 4 ainsi qu'une constante, notée MO, sont appliqués au réseau de neurones 45B également activé. Ce réseau produit un second signal d'alarme $S'_A$ de type binaire, dans lequel un état "1" est associé aux alarmes qui sont détectées par les moyens conventionnels et qui constituent de véritables menaces marquées dans le dispositif de visualisation 5, et un état "0" correspond aux fausses alarmes.

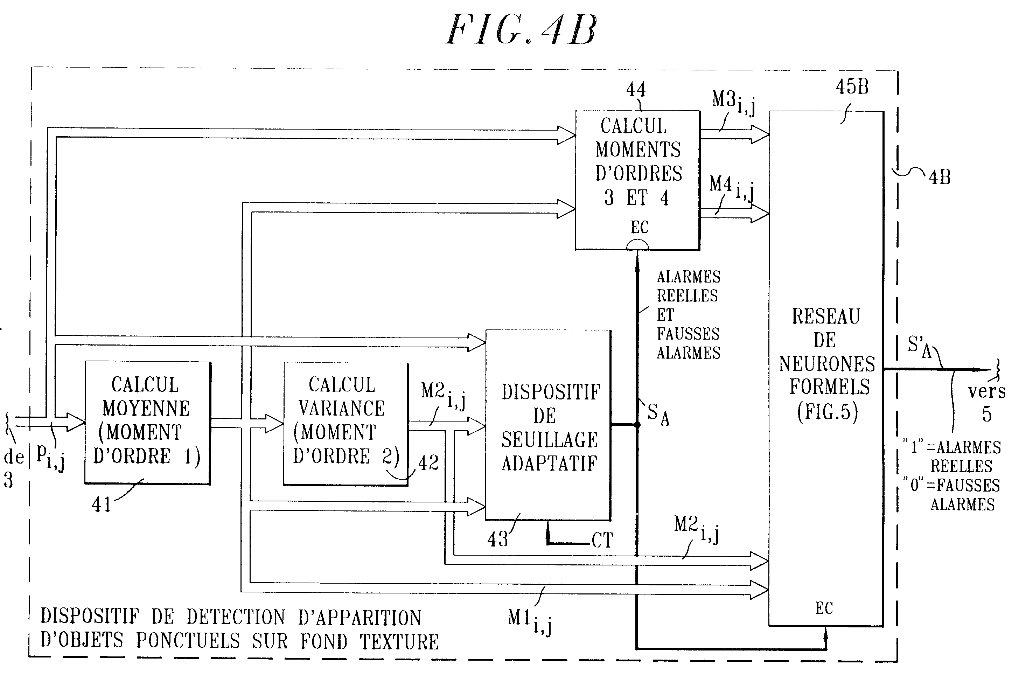

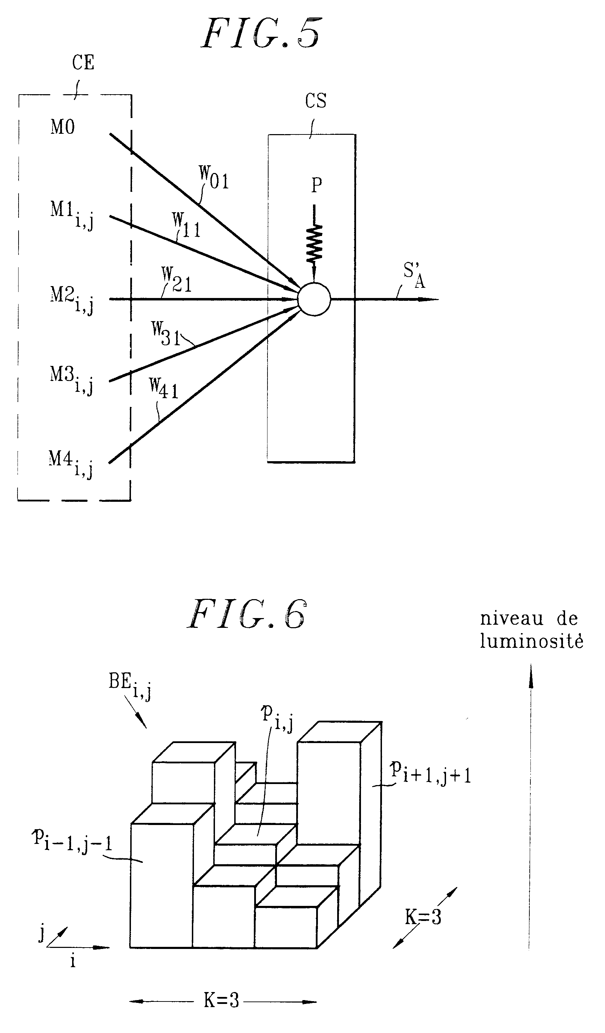

Un schéma modélisé d'un réseau de neurones formels à une couche est montré à la figure 5. Une couche d'entrée CE ou rétine reçoit les moments d'ordre 1, 2, 3 et 4 calculés par les moyens 41, 42 et 44 ainsi que la constante MO. Ces moments et la constante MO sont multipliés par des coefficients synaptiques respectifs $W_{11}$ à $W_{41}$ et $W_{01}$ associés à des connexions synaptiques. Ces connexions synaptiques sont reliées à un unique neurone de la couche de sortie CS qui en réponse est excité par un potentiel $p_{i,j}$ donné par :

$$P_{i,j} = W_{01}.M0 + W_{11}.M1_{i,j} + W_{21}.M2_{i,j} + W_{31}.M3_{i,j} + W_{41}.M4_{i,j} .$$

Le signal de sortie $S'_A$ de ce neurone de sortie, constituant le signal d'alarme du dispositif 4B selon l'invention, est donné par application de la fonction sigmoïde SIG à ce potentiel, soit :

$$S'_A = SIG(P_{i,j}) .$$

La fonction sigmoïde, connue dans les applications de réseau de neurones formels, est une fonction non linéaire constituée de fonctions tangente hyperbolique. Elle permet de rendre binaire la sortie du réseau de neurones. De manière similaire, l'homme du métier concevra aisément qu'un réseau de neurones multicouche peut être utilisé dans le cadre de l'invention. A titre indicatif, les coefficients synaptiques de multiplication sont obtenus lors d'une phase d'apprentissage utilisant par exemple l'algorithme de rétropropagation du gradient. Cet algorithme consiste à faire converger les valeurs des coefficients synaptiques vers des valeurs optimales par comparaison itérative des résultats attendus de classification des alarmes et des résultats obtenus.

En comparaison avec les techniques temporelles connues de détection d'objets ponctuels dans une image numérisée, les deux réalisations de dispositif de détection selon l'invention présentées précédemment sont caractérisées par des temps de délai de détection très courts. En effet selon les techniques temporelles, l'analyse de l'évolution temporelle des niveaux de luminosité des pixels implique des délais de traitement succédant à l'apparition effective d'un objet dans l'image numérisée. Basée sur des traitements statistiques de la répartition spatiale des niveaux de luminosité des pixels, l'invention présente l'avantage considérable de détecter ces objets ponctuels de manière instantanée.

En outre, l'homme du métier appréciera qu'une réalisation du dispositif selon l'invention peut être envisagée sous une forme partiellement ou intégralement logicielle.

**Revendications**

**1 -** Procédé de détection d'apparition d'objets ponctuels sur fond texturé dans une image numérisée sous la forme d'une pluralité de pixels comprenant, pour chacun de blocs de pixels ($BE_{i,j}$) ayant une dimension donnée (K x K) et centré sur l'un respectif desdits pixels de l'image, les étapes suivantes :

un calcul de moyenne ($M1_{i,j}$) de niveaux de luminosité ($p_{i,j}$) des pixels du bloc,

un calcul de variance ($M2_{i,j}$) des niveaux de luminosité des pixels du bloc, ladite variance étant représentative de la moyenne des valeurs absolues des écarts des niveaux de luminosité des pixels du bloc de part et d'autre de ladite moyenne de niveaux ($M1_{i,j}$), et

une détection d'apparition d'objet ponctuel, en tant que pixel central, dans le bloc lorsque le niveau de luminosité ($p_{i,j}$) dudit pixel central du bloc ($BE_{i,j}$) est supérieur ou inférieur à deux seuils respectivement égaux à la somme de ladite moyenne de niveaux ($M1_{i,j}$) et de ladite moyenne des valeurs absolues des écarts, et à la différence entre ladite moyenne de niveaux et ladite moyenne des valeurs absolues des écarts,

caractérisé en ce qu'il comprend, en outre,

en réponse à ladite détection d'apparition, un calcul de moments d'ordre trois (M3$_{i,j}$) et quatre (M4$_{i,j}$) des niveaux de luminosité (p$_{i,j}$) dudit bloc (BE$_{i,j}$) représentatifs tous deux de la répartition des niveaux de luminosité (p$_{i,j}$) des pixels du bloc (BE$_{i,j}$) de part et d'autre de ladite moyenne de niveaux (M1$_{i,j}$),

et pour l'intégralité de ladite image, une sélection d'objets ponctuels parmi les objets ponctuels dont les apparitions sont détectées selon l'étape de détection, en fonction au moins des moments d'ordre trois et quatre (M3$_{i,j}$, M4$_{i,j}$) calculés pour les blocs (BE$_{i,j}$) correspondants aux apparitions d'objet ponctuel détectées.

**2** - Procédé conforme à la revendication 1, caractérisé en ce que ladite sélection est effectuée par une classification linéaire opérée sur les moments d'ordre trois et quatre (M3$_{i,j}$, M4$_{i,j}$) dudit bloc.

**3** - Procédé conforme à la revendication 2, caractérisé en ce que ladite classification linéaire est précédée par une augmentation du nombre des détections d'apparition effectuée par réglage des deux seuils, et comprend
- la détermination d'un barycentre, en terme de moments d'ordre trois et quatre, pour l'ensemble des moments d'ordre trois et quatre calculés en réponse à des détections d'apparition d'objets ponctuels dans l'image, et
- la sélection des pixels centraux de blocs associés auxdits moments d'ordre trois et quatre définis dans une fenêtre prédéterminée autour dudit barycentre.

**4** - Procédé conforme à la revendication 1, caractérisé en ce que ladite sélection comprend, suite à une détection d'apparition d'un objet ponctuel,
- la multiplication matricielle des moyenne, variance, moments d'ordre trois et quatre du bloc correspondant (BE$_{i,j}$) par une matrice de coefficients synaptiques (W$_{11}$ à W$_{41}$) pour établir une valeur (P$_{i,j}$) à laquelle est appliquée une fonction non linéaire (SIG) afin de produire un signal binaire (S'$_A$) dont les états indiquent respectivement la sélection (1") et le défaut de sélection (O") dudit objet ponctuel.

**5** - Procédé conforme à la revendication 4, caractérisé en ce que ladite multiplication matricielle inclut en outre la multiplication d'une constante prédéterminée (MO) par un coefficient synaptique (W$_{01}$) supplémentaire de ladite matrice de coefficients synaptiques.

8

# FIG. 1
## (TECHNIQUE ANTERIEURE)

# FIG. 2
## (TECHNIQUE ANTERIEURE)

FIG.3

moment d'ordre 3

N1
alarmes réelles

N2
fausses alarmes

(moment d'ordre 4)x10$^3$

FIG.7

I

$P_{i,j}$

K=7

$BE_{i,j}$

K=7

10

# FIG.4A

CALCUL
MOMENTS
D'ORDRE
3 ET 4

44

M3$_{i,j}$

45A

CLASSIFICATEUR
LINEAIRE

4A

EC

M4$_{i,j}$

S'$_A$

ALARMES REELLES
ET
FAUSSES ALARMES

ALARMES =
MENACES REELLES

de | P$_{i,j}$

CALCUL
MOYENNE
(MOMENT
D'ORDRE 1)

3

41

M1$_{i,j}$

CALCUL
VARIANCE
(MOMENT
D'ORDRE 2)

M2$_{i,j}$

42

DISPOSITIF
DE
SEUILLAGE
ADAPTATIF

S$_A$

43

CT

vers
5

DISPOSITIF DE DETECTION D'APPARITION
D'OBJETS PONCTUELS SUR FOND TEXTURE

# FIG.4B

# FIG.5

CE

M0

$W_{01}$

$M1_{i,j}$

$W_{11}$

$W_{21}$

$M2_{i,j}$

$W_{31}$

$M3_{i,j}$

$W_{41}$

$M4_{i,j}$

CS

P

$S'_A$

# FIG.6

niveau de luminosité

$BE_{i,j}$

$p_{i,j}$

$p_{i+1,j+1}$

$p_{i-1,j-1}$

j

i

K=3

K=3

EP 0 575 208 A1

Office européen
des brevets

**RAPPORT DE RECHERCHE EUROPEENNE**

Numero de la demande

EP    93 40 1318

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN vol. 14, no. 503 (P-1126)2 Novembre 1990 & JP-A-22 06 885 ( TECH RES & DEV INST OF JAPAN DEF AGENCY ) 16 Août 1990 * abrégé * | 1 | G06F15/68 G06F15/70 |
| A | EP-A-0 351 003 (TELECOMMUNICATIONS RADIOELECTRIQUES ET TELEPHONIQUES) * abrégé * * page 2, ligne 1 - ligne 14 * * page 7, ligne 29 - ligne 43 * | 1 | |
| A | US-A-4 760 541 (JAMES P. WEYGANDT ET AL.) * colonne 1, ligne 1 - ligne 50 * | 1 | |

DOMAINES TECHNIQUES RECHERCHES (Int. Cl.5 )

G06F

Le présent rapport a été établi pour toutes les revendications

| Lieu de la recherche | Date d'achèvement de la recherche | Examinateur |
|---|---|---|
| LA HAYE | 23 SEPTEMBRE 1993 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

14